# EUROPEAN PATENT APPLICATION

(11) **EP 0 713 100 A1**
(43) Date of publication of application: **22.05.1996**
(21) Application number: 95308022.3
(22) Date of filing: 09.11.1995
(51) Int. Cl.: G01R 31/28, G02F 1/13, G09G 3/04

(54) **Fault-detecting electronic display module**

(30) Priority: 15.11.1994 US 339540
(71) Applicant: AT&T GLOBAL INFORMATION SOLUTIONS INTERNATIONAL INC., Dayton, Ohio 45479 (US)
(72) Inventor: Wilkus, Stephen A., Lincroft, New Jersey 07738 (US)
(74) Representative: Robinson, Robert George

(57) **Abstract**

A fault-detecting electronic display module (10) for use in conjunction with electronic display systems includes a fault-detecting line (18) positioned around at least a portion of the perimeter of the electronic display module (10). In one preferred embodiment, the electronic display is a liquid crystal display (14). The status of the electrical continuity of the fault-detecting line (18) is periodically checked and, if disrupted, a fault status message is forwarded to a communications base station indicating that the electronic display may be faulty due to damaged components, such as a broken cable (16) or cracked liquid crystal display (14).

## Description

The present invention relates generally to electronic display modules for electronic display systems.

Large retail stores often deal with several tens of thousands of different kinds of goods. In such stores, much attention is paid to the management and control of the inventory of goods and the displaying and labelling of the prices of the goods being sold. Accordingly, much effort is expended and careful attention is paid to managing and controlling the stock of goods and to labelling prices of products displayed on shelves or in showcases. Mistakes as to the labelling of the prices of goods could cause dissatisfaction to customers and damage the reputation of the store.

Therefore, it is desirable to correctly identify the prices of goods and minimize the number of pricing errors. Accordingly, electronic display systems having multiple electronic display modules have been developed. Such electronic display systems are typically arranged such that light weight compact electronic display modules which display the price of products, along with other product information, are placed on display shelves or showcases in front of the displayed products. These types of electronic display systems typically allow the prices of products displayed in the electronic display portions of the electronic display modules to be changed when the prices are raised or lowered and/or when the arrangement of goods displayed on the display shelves or showcases are changed. It is advantageous in such electronic display systems to have electronic display modules which are capable of providing acknowledgement of the receipt of transmitted price changes, as well as other transmitted information, to help identify "lost" or broken electronic display modules.

In such electronic display systems, it becomes possible to reliably identify the correct prices of goods since changes in the prices of goods displayed on the electronic display portions of the electronic display modules are controlled and managed by a communications base system or some other processing control unit. If desired, other product information, for example inventory or stocking information, product identification numbers or codes, and product volume or weight, could be displayed on the electronic display modules. In addition, electronic display systems in accordance with the present invention could be used in applications other than retail store environments, for example in identifying inventory information in warehouses or distribution centers. Problems may sometimes arise as a result of individual electronic display modules being damaged by, for example, improper installation or contact with a shopping cart or some other object. An electronic display module can appear "functional" to the communications base station providing messages and other information to the electronic display module, even though the module is not displaying the transmitted information due to a cracked display, or a broken cable.

It is an object of the present invention to provide an electronic display system which alleviates the above-mentioned problems.

According to one aspect of the invention there is provided an electronic display system having an electronic display module, characterized by a fault-detecting line extending around at least a portion of the perimeter of said electronic display module.

According to another aspect of the invention there is provided a method of detecting faults in an electronic display module, characterized by the steps of providing a fault-detecting line extending around at least a portion of the perimeter of said electronic display module, periodically sensing the electrical continuity of said fault-detecting line, and providing a fault acknowledgement message upon sensing a disruption in the electrical continuity of said fault-detecting line.

One embodiment of the present invention will now be described by way of example with reference to the accompanying drawings, in which:

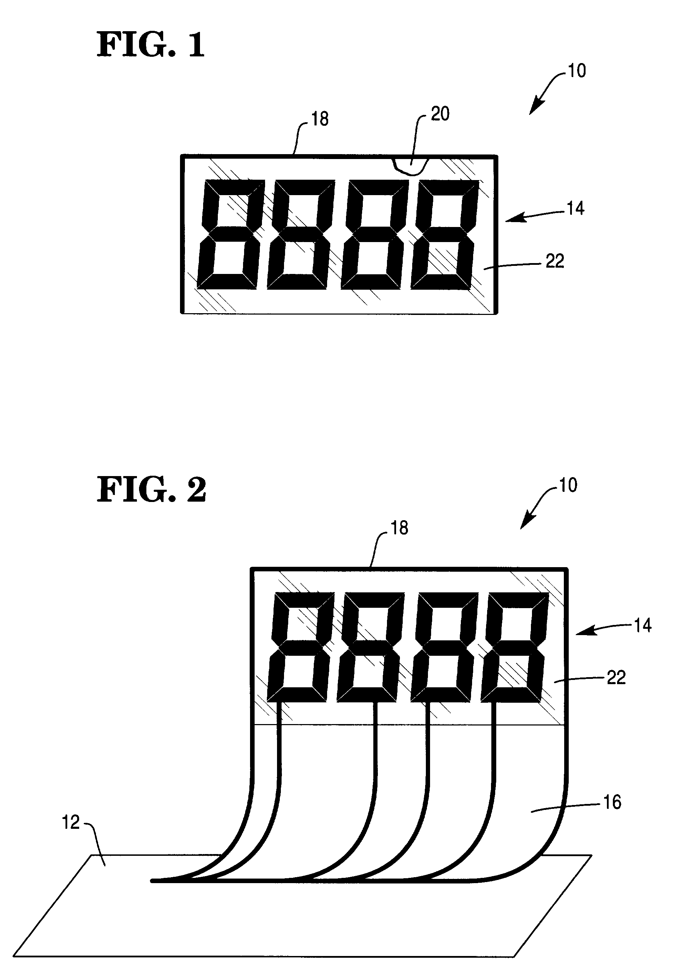

Figure 1 is a top view of a liquid crystal display (LCD) portion of a fault-detecting electronic display module for electronic display systems in accordance with the present invention; and
Figure 2 is a perspective view of the above-mentioned fault-detecting electronic display module in accordance with the present invention attached by a cable to a logic board.

Referring now to the drawings, in which like-referenced characters indicate corresponding elements, the fault-detecting electronic display module 10 shown therein includes a logic board 12, a liquid crystal display (LCD) 14 and a cable 16, which is preferably a substantially flat multi-wire flexible electrical conductor for connecting the liquid crystal display 14 to the logic board 12. The liquid crystal display 14 includes a fault-detecting line 18 extending around part of the perimeter of the liquid crystal display 14. The fault-detecting line 18 is preferably a conductive path which is placed on either side of the cable 16.

In the present embodiment, the liquid crystal display 14 includes a liquid crystal substrate layer 20 underneath a glass protective overlay layer 22, and the fault-detecting line 18 is positioned on the liquid crystal substrate layer 20 under the glass protective overlay layer 22. In this embodiment, the liquid crystal display 14 is of a generally rectangular configuration and the fault-detecting line 18 extends around the perimeter of the liquid crystal display 14 along three of the four sides of the liquid crystal display 14. The cable 16 is connected to the liquid crystal display 14 at one of the two longer sides of the substantially rectangular configuration, and the fault-detecting line 18 extends around the perimeter of the liquid crystal display 14 along the other one of the two longer sides of the generally rectangular configuration and along the two shorter sides of the generally rectangular configuration.

A common failure mode for the fault-detecting electronic display module 10 is a broken cable 16 connecting the logic board 12 to the liquid crystal display 14. Such a failure mode can occur when the liquid crystal display 14 is assembled poorly, or when a sharp edge of the glass of the liquid crystal display 14 cuts the cable 16 when the fault-detecting electronic display module 10 is being installed or handled. Another common failure mode for the electronic display module 10 in operation is due to damage from impact to the liquid crystal display 14 from, for example, a shopping cart or some other object.

The above-mentioned failure modes would result in separation or interruption of the fault-detecting line 18 and would provide feedback to a communications base station (not shown) that the electronic display module 10 is inoperable. In particular, the fault-detecting line 18 would be sensitive to tears, cuts and misalignment of the cable 16. In addition, if the liquid crystal display 14 is damaged, it is likely that a crack in the glass protective overlay layer 22 protecting the liquid crystal substrate layer 20 would extend over the entire height of the liquid crystal display 14 thus again causing separation or interruption of the fault-detecting line 18. The electronic display system including the module 10 includes an antenna (not shown) arranged to transmit messages to, and to receive messages from, the communications base station.

The communications base station periodically senses the electrical continuity of the fault-detecting line 18, and is thereby kept apprised as to the operational status of the electronic display module 10. Thus, replacement or repair of elements of the electronic display system can be performed when necessary in a timely manner. If a faulty electronic display module 10 is detected by the communications base station, a fault acknowledgement message is sent which would be analogous to, for example, a low battery status message.

In a modification of the fault-detecting electronic display module 10, a battery power supply (not shown) is connected in series with the fault-detecting line 18 such that a faulty electronic display module 10 would completely disable the fault-detecting electronic display module 10. In a further modification of the fault-detecting electronic display module 10 a microcomputer (not shown) detects the separation or interruption of the fault-detecting line 18, blanks the liquid crystal display 14 and communicates back to the communications base station that the fault-detecting electronic display module 10 is damaged.

Although the present invention has been described above in detail, such explanation is by way of example only, and is not to be taken as a limitation on the present invention. For example, fault-detecting electronic display modules in accordance with the present invention could be used in various applications other than in connection with electronic display systems, for example in conjunction with cash register displays, telephone number displays or weight displays.

## Claims

1. An electronic display system having an electronic display module (10), characterized by a fault-detecting line 18 extending around at least a portion of the perimeter of said electronic display module (10).

2. An electronic display system according to claim 1, characterized in that said electronic display module (10) incorporates a liquid crystal display (14) having a liquid crystal substrate layer (20) and a glass protective overlay layer (22), said fault-detecting line (18) being positioned on said liquid crystal substrate layer under said glass protective overlay layer.

3. An electronic display system according to claim 2, characterized in that said liquid crystal display (14) is of a generally rectangular configuration and said fault-detecting line (18) extends around the perimeter of said liquid crystal display along three of the four sides of said generally rectangular configuration.

4. An electronic display system according to claim 1, characterized by a cable (16) connected to said electronic display module (10) to provide electrical power for the operation of said electronic display module.

5. An electronic display system according to claim 4, characterized in that said cable (16) is a substantially flat multi-wire flexible electrical conductor.

6. An electronic display system according to claims 3 and 5, characterized in that said cable (16) is connected to said liquid crystal display (14) at one of the two longer sides of said generally rectangular configuration.

7. An electronic display system according to any one preceding claims, characterized by a battery power source connected in series with said fault-detecting line (18).

8. An electronic display system according to any one of the preceding claims, characterized in that said electronic display system is arranged to transmit and receive messages from a communications base station, and in that said electronic display module (10) transmits a fault acknowledgement message to said communications base station upon separation or interruption of said fault-detecting line.

9. An electronic display system according to claim 8, characterized by an antenna for transmitting and receiving messages to and from said communications base station.

10. A method of detecting faults in an electronic display module, characterized by the steps of providing a fault-detecting line (18) extending around at least a portion of the perimeter of said electronic display module (10), periodically sensing the electrical continuity of said fault-detecting line (18), and providing a fault acknowledgement message upon sensing a disruption in the electrical continuity of said fault-detecting line (18).
